# EUROPEAN PATENT APPLICATION

(11) **EP 4 718 519 A1**
(43) Date of publication of application: **01.04.2026**
(21) Application number: 24890314.8
(22) Date of filing: 12.09.2024
(51) Int. Cl.: H01M 4/134, H01M 4/04, H01M 4/38, H01M 4/1395

(54) **NEGATIVE ELECTRODE SHEET AND PREPARATION METHOD THEREFOR, BIPOLAR ELECTRODE SHEET AND PREPARATION METHOD THEREFOR, AND BATTERY AND ELECTRIC APPARATUS**

(30) Priority: 15.11.2023 CN 202311525462
(71) Applicant: Guangzhou Automobile Group Co., Ltd., Guangzhou, Guangdong 511434 (CN)
(72) Inventor: SHI, Yong, Guangzhou, Guangdong 511434 (CN); WU, Jian, Guangzhou, Guangdong 511434 (CN); XU, Nan, Guangzhou, Guangdong 511434 (CN)
(74) Representative: Metida
(86) International application number: PCT/CN2024/118587
(87) International publication number: WO 2025/102955

(57) **Abstract**

Disclosed are an anode electrode sheet and a preparation method therefor, a bipolar electrode sheet and a preparation method therefor, a battery and an electric device. The anode electrode sheet comprises: a first current collector comprising a first side and a second side opposite to each other; a first active material layer and a second active material layer, wherein the first active material layer and the second active material layer are sequentially disposed on the first side in a direction away from the first current collector, the first active material layer comprises metallic lithium, and the second active material layer comprises a metallic lithium alloy. The use of this anode electrode sheet or bipolar electrode sheet may avoid problems such as continuous thickening of the SEI film, persistent growth of lithium dendrites, formation of dead lithium, and penetration of the separator by lithium dendrites, thereby helping to improve the cycle stability of the battery using the anode electrode sheet or bipolar electrode sheet.

## Description

The present application claims priority and benefits of a patent application No. 202311525462.0 filed with the China National Intellectual Property Administration on November 15, 2023, and the entire text of which is incorporated herein by reference.

### TECHNICAL FIELD

The present application belongs to the technical field of batteries, and in particular relates to an anode electrode sheet and a preparation method therefor, a bipolar electrode sheet and a preparation method therefor, a battery and an electric device.

### BACKGROUND

Compared with the theoretical specific capacity of 372 mAh/g of graphite negative electrodes, metallic lithium exhibits an ultra-high theoretical specific capacity of 3860 mAh/g and the most negative standard reduction potential (-3.04 V), and also features low density and small ion radius. Using metallic lithium as the active material of the battery negative electrode may further improve the energy density of the battery. However, direct contact between metallic lithium and the liquid electrolyte or electrolyte causes problems such as lithium dendrite growth and penetration of the separator, which hinders the large-scale application of lithium metal batteries.

### SUMMARY

The present application aims to solve one of the technical problems in the related art at least to a certain extent. To this end, one object of the present application is to provide an anode electrode sheet and a preparation method therefor, a bipolar electrode sheet and a preparation method therefor, a battery and an electric device. The use of this anode electrode sheet or the bipolar electrode sheet may avoid problems such as continuous thickening of a solid electrolyte interface (SEI) film, persistent growth of lithium dendrites, formation of dead lithium, and penetration of the separator by lithium dendrites, thereby helping to improve the cycle stability of the battery to which the anode electrode sheet or the bipolar electrode sheet is applied.

In a first aspect of the present application, the present application provides an anode electrode sheet. According to an embodiment of the present application, the anode electrode sheet includes:
a first current collector including a first side and a second side opposite to each other; and
a first active material layer and a second active material layer, wherein the first active material layer and the second active material layer are sequentially disposed on the first side in a direction away from the first current collector, the first active material layer includes metallic lithium, and the second active material layer includes a metallic lithium alloy.

According to the anode electrode sheet of the above embodiment of the present application, the first active material layer and the second active material layer are sequentially disposed on the first side of the first current collector in a direction away from the first current collector. The first active material layer includes metallic lithium, which may serve as a supplementary lithium source to improve the cycle life of the battery. The second active material layer includes a metallic lithium alloy. On the one hand, it may avoid direct contact between the highly reactive metallic lithium in the first active material layer and the liquid electrolyte or electrolyte. On the other hand, it may enable an alloying reaction between the metallic lithium and the metallic lithium alloy in the second active material layer during the charge and discharge process of the battery, effectively avoiding lithium dendrite growth caused by uneven deposition of metallic lithium, and problems of continuous thickening of the SEI film, formation of dead lithium, and penetration of the separator by lithium dendrites resulting from an infinite volume change rate, thereby helping to improve the cycle stability of the lithium metal battery to which the anode electrode sheet is applied. Therefore, the anode electrode sheet of the present application may avoid lithium dendrite growth caused by uneven deposition of metallic lithium on the negative electrode surface, and solve the problems of continuous thickening of the SEI film, formation of dead lithium, and penetration of the separator by lithium dendrites resulting from the infinite volume change rate of metallic lithium, thereby helping to improve the cycle stability of lithium metal batteries.

In addition, according to the above embodiment of the present application, the anode electrode sheet may further have the following additional technical features:

In some embodiments of the present application, the first current collector is a composite current collector.

In some embodiments of the present application, the first current collector is a metal foil current collector, and the metal foil current collector includes at least one selected from the group consisting of copper, aluminum, nickel, and chromium.

In some embodiments of the present application, the first current collector includes a first base film, a first conductive layer disposed on a side of the first base film, and a second conductive layer disposed on an opposite other side of the first base film.

In some embodiments of the present application, the first conductive layer and the second conductive layer separately and independently include at least one selected from the group consisting of copper, aluminum, nickel, and chromium. This may improve the conductivity of the first current collector.

In some embodiments of the present application, the first conductive layer and the second conductive layer separately and independently have a thickness of 0.2 µm to 100 µm.

In some embodiments of the present application, the first base film includes at least one selected from the group consisting of polyethylene, polyethylene terephthalate, polyimide, polypropylene, polyamide, polyphenylene sulfide, and polyethylene naphthalate.

In some embodiments of the present application, the first base film has a thickness of 1 µm to 300 µm.

In some embodiments of the present application, a third active material layer is disposed on the second side of the first current collector, and the third active material layer includes metallic lithium or a metallic lithium alloy.

In some embodiments of the present application, the first active material layer is disposed on the first conductive layer, and the third active material layer is disposed on the second conductive layer.

In some embodiments of the present application, the third active material layer includes metallic lithium, a fourth active material layer is disposed on a side of the third active material layer away from the first current collector, and the fourth active material layer includes a metallic lithium alloy.

In some embodiments of the present application, the metallic lithium alloy includes an alloy formed by metallic lithium and at least one selected from the group consisting of gold, silver, indium, magnesium, zinc, chromium, nickel, molybdenum, tungsten, vanadium, titanium, niobium, zirconium, cobalt, manganese, aluminum, copper, tin, sodium, calcium, gallium, boron, silicon, carbon and phosphorus. In this way, problems of lithium dendrite growth, continuous thickening of the SEI film, formation of dead lithium, and penetration of the separator by lithium dendrites, caused by uneven deposition of metallic lithium on the negative electrode surface during the cycle of lithium metal batteries, may be solved.

In some embodiments of the present application, the metallic lithium alloy has a lithium content of 2 atm% to 98 atm%. In this way, problems of lithium dendrite growth, continuous thickening of the SEI film, formation of dead lithium, and penetration of the separator by lithium dendrites, caused by uneven deposition of metallic lithium on the negative electrode surface during the cycle of lithium metal batteries, may be solved.

In some embodiments of the present application, the first active material layer, the second active material layer, the third active material layer, and the fourth active material layer separately and independently have a thickness of 0.1 µm to 100 µm.

In a second aspect of the present application, a method for preparing an anode electrode sheet is provided. According to an embodiment of the present application, the method includes:
providing a first current collector including a first side and a second side opposite to each other;
forming a first active material layer on the first side of the first current collector, wherein the first active material layer includes metallic lithium; and
forming a second active material layer on a side of the first active material layer away from the first current collector, wherein the second active material layer includes a metal lithium alloy.

According to the method for preparing an anode electrode sheet in the above embodiment of the present application, the first current collector including a first side and a second side opposite to each other is provided, and the first active material layer is formed on the first side of the first current collector, and the second active material layer is formed on the side of the first active material layer away from the first current collector. The first active material layer includes metallic lithium, which may serve as a supplementary lithium source to improve the cycle life of the battery. The second active material layer includes a metallic lithium alloy. On one hand, it may avoid direct contact between the highly reactive metallic lithium in the first active material layer and the liquid electrolyte or electrolyte. On the other hand, it may enable an alloying reaction between the metallic lithium and the metallic lithium alloy in the second active material layer during the charge and discharge process of the battery, effectively avoiding lithium dendrite growth caused by uneven deposition of metallic lithium, and the problems of continuous thickening of the SEI film, formation of dead lithium, and penetration of the separator by lithium dendrites resulting from the infinite volume change rate, thereby helping to improve the cycle stability of the lithium metal battery using the anode electrode sheet. Therefore, the anode electrode sheet obtained by the method for preparing the anode electrode sheet of the present application may avoid lithium dendrite growth caused by uneven deposition of metallic lithium on the negative electrode surface, and solve the problems of continuous thickening of the SEI film, formation of dead lithium, and penetration of the separator by lithium dendrites resulting from the infinite volume change rate of metallic lithium, thereby helping to improve the cycle stability of lithium metal batteries.

In addition, the method for preparing an anode electrode sheet according to the above embodiment of the present application may further have the following additional technical features:

In some embodiments of the present application, the method for preparing an anode electrode sheet further includes: forming a third active material layer on the second side of the first current collector, wherein the third active material layer includes metallic lithium or a metallic lithium alloy.

In some embodiments of the present application, the third active material layer includes metallic lithium, and the method for preparing an anode electrode sheet further includes: forming a fourth active material layer on a side of the third active material layer away from the first current collector, and the fourth active material layer includes a metal lithium alloy. Thus, the cycle stability of lithium metal batteries may be improved.

In a third aspect of the present application, the present application provides a bipolar electrode sheet. According to an embodiment of the present application, the bipolar electrode sheet includes:
a second current collector including a first side and a second side opposite to each other; and
a fifth active material layer and a sixth active material layer, wherein the second current collector includes a first side and a second side opposite to each other, the fifth active material layer is disposed on the first side of the second current collector, the sixth active material layer is disposed on the second side of the second current collector, the fifth active material layer includes a metallic lithium alloy, and the sixth active material layer includes a positive electrode active material.

According to the above embodiments of the present application, the bipolar electrode sheet is achieved by providing a second current collector including a first side and a second side opposite to each other, forming a fifth active material layer on the first side of the second current collector, and forming a sixth active material layer on the second side of the second current collector. The fifth active material layer includes a metallic lithium alloy, which may enable an alloying reaction between the metallic lithium and the metallic lithium alloy in the fifth active material layer during the charge and discharge process of the battery, effectively avoiding lithium dendrite growth caused by uneven deposition of metallic lithium, and problems of continuous thickening of the SEI film, formation of dead lithium, and penetration of the separator by lithium dendrites resulting from the infinite volume change rate, thereby helping to improve the cycle stability of the battery to which the bipolar electrode sheet is applied. The sixth active material layer includes a positive electrode active material, and a bipolar electrode may be obtained. Therefore, the bipolar electrode sheet of the present application may avoid lithium dendrite growth caused by the uneven deposition of metallic lithium on the negative electrode surface, and solve the problems of continuous thickening of the SEI film, formation of dead lithium, and penetration of the separator by lithium dendrites resulting from the infinite volume change rate of metallic lithium, thereby helping to improve the cycle stability of the battery.

In addition, the bipolar electrode sheet according to the above embodiment of the present application may further have the following additional technical features:

In some embodiments of the present application, a seventh active material layer is disposed on the first side of the second current collector, the seventh active material layer includes metallic lithium, and the fifth active material layer is disposed on a side of the seventh active material layer away from the second current collector.

In some embodiments of the present application, the second current collector is a composite current collector.

In some embodiments of the present application, the second current collector is a metal foil current collector, and the metal foil current collector includes a stainless steel alloy foil, and the stainless steel alloy foil includes at least one selected from the group consisting of nickel, chromium, and copper.

In some embodiments of the present application, the second current collector includes a second base film, a third conductive layer disposed on a side of the second base film, and a fourth conductive layer disposed on an opposite other side of the second base film, the fifth active material layer is disposed on the third conductive layer, and the sixth active material layer is disposed on the fourth conductive layer.

In some embodiments of the present application, the second current collector includes a second base film, a third conductive layer disposed on the side of the second base film, and a fourth conductive layer disposed on the opposite other side of the second base film, the seventh active material layer is disposed on the third conductive layer, and the sixth active material layer is disposed on the fourth conductive layer.

In some embodiments of the present application, the third conductive layer includes at least one selected from the group consisting of copper, aluminum, nickel and chromium, preferably copper. Thereby, the conductivity of the second current collector may be improved.

In some embodiments of the present application, the fourth conductive layer includes at least one selected from the group consisting of copper, aluminum, nickel and chromium, preferably aluminum. Thereby, the conductivity of the second current collector may be improved.

In some embodiments of the present application, the positive electrode active material includes at least one selected from the group consisting of lithium nickel cobalt manganese oxide, lithium iron manganese phosphate, lithium iron phosphate, lithium manganese oxide, lithium cobalt oxide, lithium nickel oxide, lithium-rich manganese-based positive electrode material, lithium nickel manganese oxide and lithium vanadium oxyphosphate.

In a fourth aspect of the present application, the present application provides a method for preparing a bipolar electrode sheet. According to an embodiment of the present application, the method includes:
providing a second current collector including a first side and a second side opposite to each other;
forming a fifth active material layer on the first side of the second current collector, wherein the fifth active material layer includes a metallic lithium alloy; and
forming a sixth active material layer on the second side of the second current collector, wherein the sixth active material layer includes a positive electrode active material.

According to the method for preparing a bipolar electrode sheet according to the above embodiment of the present application, a second current collector including a first side and a second side opposite to each other is provided, and a fifth active material layer is formed on the first side of the second current collector, and a sixth active material layer is formed on the second side of the second composite current collector. The fifth active material layer includes a metallic lithium alloy, which may cause an alloying reaction between metallic lithium and the metallic lithium alloy in the fifth active material layer during the charge and discharge process of the battery, effectively avoiding lithium dendrite growth caused by uneven deposition of metallic lithium, and problems of continuous thickening of the SEI film, formation of dead lithium, and penetration of the separator by lithium dendrites caused by an infinite volume change rate, thereby helping to improve the cycle stability of the battery to which the bipolar electrode sheet is applied. The sixth active material layer includes a positive electrode active material, and a bipolar electrode sheet may be obtained. Therefore, the bipolar electrode sheet obtained by the method for preparing the bipolar electrode sheet of the present application may avoid lithium dendrite growth caused by the uneven deposition of metallic lithium on the negative electrode surface, and solve the problems of continuous thickening of the SEI film, formation of dead lithium, and penetration of the separator by lithium dendrites resulting from the infinite volume change rate of metallic lithium, thereby helping to improve the cycle stability of the battery.

In addition, the method for preparing a bipolar electrode sheet according to the above embodiment of the present application may further have the following additional technical features:

In some embodiments of the present application, the method for preparing a bipolar electrode sheet further includes: before forming the fifth active material layer on the first side of the second current collector, pre-forming a seventh active material layer on the second side of the second current collector, wherein the seventh active material layer includes metallic lithium. Therefore, the seventh active material layer may serve as a supplementary lithium source to improve the cycle life of the battery.

In a fifth aspect of the present application, the present application provides a battery. According to an embodiment of the present application, the battery includes the above-mentioned anode electrode sheet or the anode electrode sheet obtained by the above-mentioned method for preparing an anode electrode sheet, the above-mentioned bipolar electrode sheet or the bipolar electrode sheet obtained by the above-mentioned method for preparing a bipolar electrode sheet. Therefore, the battery has higher cycle stability.

In addition, the battery according to the above embodiment of the present application may further have the following additional technical features:

In some embodiments of the present application, the battery includes a liquid battery, a semi-solid battery and an all-solid battery.

In some embodiments of the present application, the battery includes a liquid battery and a semi-solid battery, and the battery includes a liquid electrolyte, and the liquid electrolyte includes a lithium salt and a solvent.

In some embodiments of the present application, the liquid electrolyte further includes an additive.

In some embodiments of the present application, the lithium salt includes at least one selected from the group consisting of lithium hexafluorophosphate, lithium perchlorate, lithium tetrafluoroborate, lithium hexafluoroarsenate, lithium trifluoromethanesulfonate, lithium bis(trifluoromethanesulfonyl)imide, lithium bis(fluorosulfonyl)imide, lithium trifluoromethanesulfonyl-n-perfluorobutylsulfonylimide, lithium fluorosulfonyl-n-perfluorobutylsulfonylimide, lithium bis(oxalato)borate and lithium tris(trifluoromethylsulfonyl)methide.

In some embodiments of the present application, the solvent includes at least one selected from the group consisting of ethylene carbonate, propylene carbonate, butylene carbonate, dimethyl carbonate, diethyl carbonate, ethyl methyl carbonate, γ-butyrolactone, tetrahydrofuran, 2-methyl-tetrahydrofuran, dimethoxydimethane, 1,2-dimethoxyethane and acetonitrile.

In some embodiments of the present application, the additive includes at least one selected from the group consisting of a film-forming additive, a conductive additive, a flame retardant additive, an overcharge protection additive, an additive for controlling water and HF content, a low-temperature additive, and a negative electrode stabilizer.

In some embodiments of the present application, the battery includes a semi-solid-state battery and an all-solid-state battery, and the battery includes an electrolyte, wherein the electrolyte includes at least one selected from the group consisting of an inorganic solid electrolyte, a polymer solid electrolyte, and a composite solid electrolyte.

In some embodiments of the present application, the inorganic solid electrolyte includes at least one selected from the group consisting of an oxide-based solid electrolyte, a sulfide-based solid electrolyte, and a halide-based solid electrolyte. The oxide-based solid electrolyte includes at least one selected from the group consisting of a NASICON solid electrolyte, a perovskite solid electrolyte and a garnet solid electrolyte; the sulfide-based solid electrolyte includes at least one selected from the group consisting of Li₆PS₅F, Li₆PS₅Cl, Li₆PS₅Br, Li₆PS₅I, Li₂S-SiS₂, Li₂S-P₂S₅, Li₂S-GeS₂, Li₂S-SiS₂-P₂S₅, Li₂S-GeS₂-P₂S₅, Li₂S-SnS₂-P₂S₅ and Li₂S-AlS₂-P₂S₅; and the halide-based solid electrolyte includes at least one selected from the group consisting of Li₂MnCl₄, Li₂ZnCl₄, LiYbF₄, LiAlF₄, Li₃YCl₆, Li₃BrCl₆ and Li₆CoCl₈.

In some embodiments of the present application, the polymer solid electrolyte includes a polymer matrix, an inorganic filler and a lithium salt. The polymer matrix includes at least one selected from the group consisting of polyethylene oxide, polycarbonate, polytrimethylene carbonate, polymethyl methacrylate, polyacrylonitrile, polyvinylidene fluoride, polyvinylidene fluoride-hexafluoroethylene copolymer and lithium polyacrylate; the inorganic filler includes at least one selected from the group consisting of Li_{1.3}Al_{0.3}Ti_{1.7}(PO₄)₃, lithium lanthanum zirconium oxide, alumina and a metal organic framework; and the lithium salt includes at least one selected from the group consisting of LiAsF₆, LiPF₆, LiClO₄, lithium bis(trifluoromethanesulfonyl)imide, lithium bis(fluorosulfonyl)imide and lithium tetrafluoroborate.

In a sixth aspect of the present application, the present application provides an electric device. According to an embodiment of the present application, the electric device includes the above-mentioned battery. The electric device and the above-mentioned battery have the same advantages over the prior art, which will not be described in detail here.

Additional aspects and advantages of the present application will be set forth in part in the description which follows and, in part, will be obvious from the description which follows, or may be learned by practice of the present application.

### BRIEF DESCRIPTION OF THE DRAWINGS

The above and/or additional aspects and advantages of the present application will become apparent and readily understood from the following description of the embodiments with reference to the accompanying drawings, in which:
FIG. 1 is a schematic structural diagram of an anode electrode sheet according to an embodiment of the present application;
FIG. 2 is a schematic structural diagram of a first current collector according to an embodiment of the present application;
FIG. 3 is a schematic structural diagram of an anode electrode sheet according to another embodiment of the present application;
FIG. 4 is a schematic structural diagram of an anode electrode sheet according to another embodiment of the present application;
FIG. 5 is a schematic structural diagram of an anode electrode sheet according to another embodiment of the present application;
FIG. 6 is a schematic flow chart of a method for preparing an anode electrode sheet according to an embodiment of the present application;
FIG. 7 is a schematic structural diagram of a bipolar electrode sheet according to an embodiment of the present application;
FIG. 8 is a schematic structural diagram of a second current collector according to an embodiment of the present application;
FIG. 9 is a schematic structural diagram of a bipolar electrode according to yet another embodiment of the present application;
FIG. 10 is a schematic structural diagram of a bipolar electrode sheet according to yet another embodiment of the present application; and
FIG. 11 is a schematic flow chart of a method for preparing a bipolar electrode sheet according to an embodiment of the present application.

Reference numerals:
100-negative electrode; 10-first current collector; 11-first base film; 12-first conductive layer; 13-second conductive layer; 20-first active material layer; 30-second active material layer; 40-third active material layer; 50-fourth active material layer; 200-bipolar electrode sheet ; 210-second current collector; 211-second base film; 212-third conductive layer; 213-fourth conductive layer; 220-fifth active material layer; 230-sixth active material layer; 240 -seventh active material layer.

### DETAILED DESCRIPTION

Embodiments of the present application are described in detail below, examples of which are shown in the accompanying drawings, wherein the same or similar reference numerals throughout represent the same or similar elements or elements having the same or similar functions. The embodiments described below with reference to the accompanying drawings are exemplary and are intended to explain the present application, but should not be construed as limiting the present application.

In the description of the present application, it should be understood that the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential" and the like indicate orientations or positional relationships based on the orientations or positional relationships shown in the accompanying drawings, and are only for the convenience of describing the present application and simplifying the description, rather than indicating or implying that the device or element referred to must have a specific orientation, be constructed and operated in a specific orientation, and therefore should not be understood as limiting the present application.

In addition, the terms "first" and "second" are used for descriptive purposes only and should not be understood as indicating or implying relative importance or implicitly indicating the quantity of the indicated technical features. Therefore, features defined as "first" or "second" may explicitly or implicitly include at least one of the features. In the description of the present application, "a plurality of" means at least two, for example, two, three, etc., unless otherwise clearly and specifically defined.

In the present application, unless otherwise clearly specified and limited, a first feature being "on" or "under" a second feature may mean that the first and second features are in direct contact, or the first and second features are in indirect contact through an intermediate medium. Moreover, the first feature being "above", "over" and "on top of" the second feature may mean that the first feature is directly above or obliquely above the second feature, or simply means that the first feature is horizontally higher than the second feature. The first feature being "below", "under", and "beneath" the second feature may mean that the first feature is directly below or obliquely below the second feature, or simply means that the first feature is at a smaller horizontal height than the second feature.

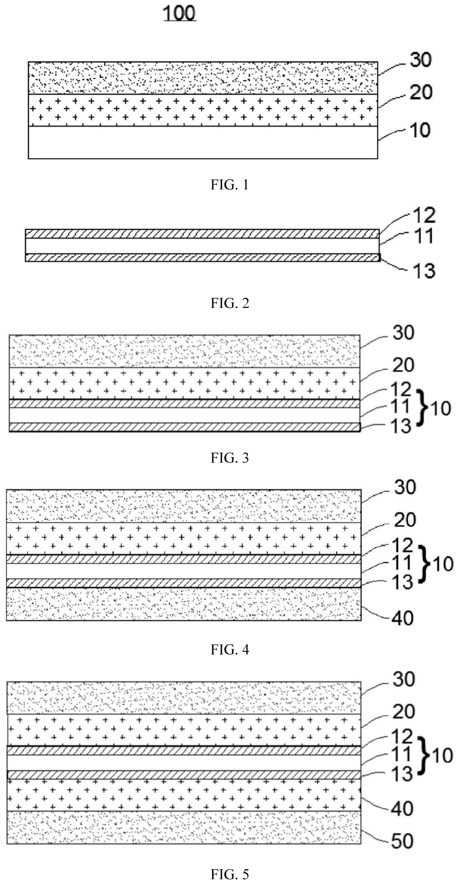

In a first aspect of the present application, the present application provides an anode electrode sheet. According to an embodiment of the present application, referring to FIG. 1, an anode electrode sheet 100 includes a first current collector 10, a first active material layer 20, and a second active material layer 30.

According to an embodiment of the present application, the first current collector 10 includes a first side and a second side opposite to each other. It should be noted that the specific type of the first current collector 10 is not particularly limited, and those skilled in the art may select it according to actual needs. For example, the first current collector 10 may be a metal foil current collector or a composite current collector.

According to a specific embodiment of the present application, the first current collector 10 is a metal foil current collector, and the metal foil current collector may include at least one of copper, aluminum, nickel and chromium.

According to a specific embodiment of the present application, referring to FIG. 2, the first current collector 10 is a composite current collector. The first current collector 10 may include a first base film 11, a first conductive layer 12, and a second conductive layer 13.

According to a specific embodiment of the present application, the first base film 11 is made of a polymer, which has a lower density than metal current collectors such as copper foil. Therefore, the first current collector 10 prepared from the base film also has a lower density than metal current collectors such as copper foil, which may improve the energy density of the battery.

It should be noted that the specific material of the above-mentioned first base film 11 is not particularly limited, and those skilled in the art may choose it according to actual needs. For example, it may include at least one of polyethylene (PE), polyethylene terephthalate (PET), polyimide (PI), polypropylene (PP), polyamide (PA), polyphenylene sulfide (PPS), and polyethylene naphthalate (PEN). Optionally, the first base film 11 includes at least one of polyethylene terephthalate (PET), polypropylene (PP) and polyimide (PI); alternatively, the first base film 11 includes polyimide and/or polyphenylene sulfide. Polyimide and polyphenylene sulfide have flame retardant effects, thereby reducing the fire hazard caused by short circuits due to lithium dendrites piercing the film.

According to a specific embodiment of the present application, the first base film 11 may have a thickness of 1 µm to 300 µm, for example, 1 µm, 5 µm, 10 µm, 30 µm, 50 µm, 100 µm, 150 µm, 200 µm, 250 µm, or 300 µm.

According to a specific embodiment of the present application, referring to FIG. 2, the first conductive layer 12 is disposed on one side of the first base film 11. By disposing the first conductive layer 12 on one side of the first base film 11, the conductivity of the first current collector 10 may be improved.

It should be noted that the material of the first conductive layer 12 is not particularly limited, and those skilled in the art may select it according to actual needs, as long as it has excellent conductivity and good mechanical properties. For example, it may include at least one of copper, aluminum, nickel and chromium. Specifically, the first conductive layer 12 may have a thickness of 0.2 µm to 100 µm, for example, 0.2 µm, 0.5 µm, 1 µm, 5 µm, 10 µm, 20 µm, 30 µm, 40 µm, 50 µm, 60 µm, 70 µm, 80 µm, 90 µm, or 100 µm.

According to a specific embodiment of the present application, referring to FIG. 2, the second conductive layer 13 is disposed on an opposite other side of the first base film 11. By disposing the second conductive layer 13 on the opposite other side of the first base film 11, the conductivity of the first current collector 10 may be further improved.

It should be noted that the material of the second conductive layer 13 is not particularly limited, and those skilled in the art may select it according to actual needs, as long as it has excellent conductivity and good mechanical properties. For example, it may include at least one of copper, aluminum, nickel and chromium. Specifically, the second conductive layer 13 may have a thickness of 0.2 µm to 100 µm, for example, 0.2 µm, 0.5 µm, 1 µm, 5 µm, 10 µm, 20 µm, 30 µm, 40 µm, 50 µm, 60 µm, 70 µm, 80 µm, 90 µm, or 100 µm.

According to a specific embodiment of the present application, the first conductive layer 12 and the second conductive layer 13 may each be separately and independently prepared by physical vapor deposition (PVD), chemical vapor deposition (CVD) or electroplating. For example, when aluminum is used for the first conductive layer 12 or the second conductive layer 13, aluminum may be directly plated on the first base film 11 by vapor evaporation; when copper is used for the first conductive layer 12 or the second conductive layer 13, it may be prepared on the first base film 11 by a one-step method, a two-step method, or a three-step method. The one-step method includes a one-step chemical deposition method, a one-step vacuum magnetron sputtering method, and a one-step vacuum evaporation method. The one-step chemical deposition method deposits a copper layer through chemical reactions, the one-step vacuum magnetron sputtering method deposits a copper layer through repeated magnetron sputtering, and the one-step vacuum evaporation method deposits a copper layer through repeated evaporation. The two-step method involves first priming the copper layer by magnetron sputtering, followed by electroplating to thicken the copper layer. The three-step method involves first priming the copper layer by magnetron sputtering, then performing vacuum evaporation, and finally completing the thickening of the copper layer by electroplating to thicken the copper layer.

Therefore, the anode electrode sheet 100 of the present application may, on one hand, improve its own mechanical strength and mechanical properties by adopting the first current collector 10. On the other hand, compared with metal current collectors such as copper foil, the first current collector 10 has the advantages of low manufacturing cost, high safety, and good compatibility. In addition, the density of the first current collector 10 is lower than that of metal current collectors such as copper foil (with a weight reduction of more than 60%), which may improve the energy density of the battery.

According to an embodiment of the present application, referring to FIG. 1, the first active material layer 20 and the second active material layer 30 are sequentially disposed on the first side of the first current collector 10 in a direction away from the first current collector 10. The inventors have found that by sequentially arranging the first active material layer 20 and the second active material layer 30 on the first side of the first current collector 10 in a direction away from the first current collector 10, the first active material layer 20 includes metallic lithium, which may serve as a supplementary lithium source to improve the cycle life of the battery, and the second active material layer 30 includes a metallic lithium alloy. On one hand, the second active material layer 30 may prevent the highly reactive metallic lithium in the first active material layer 20 from directly contacting the liquid electrolyte or electrolyte. On the other hand, it may enable an alloying reaction between the metallic lithium and the metallic lithium alloy in the second active material layer 30 during the charge and discharge process of the battery, effectively avoiding lithium dendrite growth caused by the uneven deposition of metallic lithium, and problems of continuous thickening of the SEI film, formation of dead lithium, and penetration of the separator by lithium dendrites resulting from the infinite volume change rate, thereby helping to improve the cycle stability of the lithium metal battery to which the anode electrode sheet 100 is applied.

The inventors have found that in the related art, the first active material layer is a metallic lithium alloy, and the second active material layer is metallic lithium. This solution still causes the metallic lithium to come into direct contact with the liquid electrolyte or electrolyte, causing lithium dendrite growth.

According to a specific embodiment of the present application, referring to FIG. 3, the first active material layer 20 may be disposed on the first conductive layer 12.

It should be noted that the thickness of the first active material layer 20 and the second active material layer 30 is not particularly limited, and those skilled in the art may select the thickness according to actual needs. As a preferred embodiment, the first active material layer 20 and the second active material layer 30 may each separately and independently have a thickness of 0.1 µm to 100 µm, for example, 0.1 µm, 0.5 µm, 1 µm, 5 µm, 10 µm, 20 µm, 30 µm, 40 µm, 50 µm, 60 µm, 70 µm, 80 µm, 90 µm, or 100 µm.

According to a specific embodiment of the present application, the specific composition of the metallic lithium alloy is not particularly limited, and those skilled in the art may select it according to actual needs. For example, it may include an alloy formed by metallic lithium and at least one selected from the group consisting of gold, silver, indium, magnesium, zinc, chromium, nickel, molybdenum, tungsten, vanadium, titanium, niobium, zirconium, cobalt, manganese, aluminum, copper, tin, sodium, calcium, gallium, boron, silicon, carbon and phosphorus. Specifically, the lithium content in the above-mentioned metal lithium alloy may be 2 atm% to 98 atm%, for example, 2 atm%, 5 atm%, 15 atm%, 25 atm%, 35 atm%, 45 atm%, 55 atm%, 65 atm%, 75 atm%, 85 atm%, 95 atm%, or 98 atm%.

According to an embodiment of the present application, referring to FIG. 4, a third active material layer 40 is disposed on the second side of the first current collector 10. The third active material layer 40 includes metallic lithium or a metallic lithium alloy. If the third active material layer 40 includes metallic lithium, the third active material layer 40 may serve as a supplementary lithium source to improve the cycle life of the battery. If the third active material layer 40 includes a metallic lithium alloy, an alloying reaction may occur between the metallic lithium and the metallic lithium alloy in the third active material layer 40 during the charge and discharge process of the battery, thereby further avoid lithium dendrite growth caused by uneven deposition of metallic lithium, and problems of continuous thickening of the SEI film, formation of dead lithium, and penetration of the separator by lithium dendrites resulting from the infinite volume change rate, thereby further helping to improve the cycle stability of the lithium metal battery to which the anode electrode sheet 100 is applied. Specifically, the third active material layer 40 may be disposed on the second conductive layer 13.

It should be noted that the thickness of the third active material layer 40 is not particularly limited, and those skilled in the art may select it according to actual needs. As a preferred embodiment, the third active material layer 40 may have a thickens of 0.1 µm to 100 µm, for example, 0.1 µm, 0.5 µm, 1 µm, 5 µm, 10 µm, 20 µm, 30 µm, 40 µm, 50 µm, 60 µm, 70 µm, 80 µm, 90 µm, or 100 µm.

According to a specific embodiment of the present application, referring to FIG. 5, the third active material layer 40 includes metallic lithium. A fourth active material layer 50 is disposed on a side of the third active material layer 40 away from the first current collector 10. The fourth active material layer 50 includes a metallic lithium alloy. By disposing a fourth active material layer 50 on the side of the third active material layer 40 away from the first current collector 10, where the fourth active material layer 50 includes a metal lithium alloy, on one hand, the highly reactive metal lithium in the third active material layer 40 may be prevented from directly contacting the liquid electrolyte or electrode, and on the other hand, the metal lithium and the metal lithium alloy in the fourth active material layer 50 may undergo an alloying reaction during the charge and discharge process of the battery, further inhibiting lithium dendrite growth caused by the uneven deposition of metallic lithium, while solving problems of continuous thickening of the SEI film, formation of dead lithium, and penetration of the separator by lithium dendrites due to the infinite volume change rate, thereby helping to improve the cycle stability of the metal lithium battery using the anode electrode sheet 100.

It should be noted that the thickness of the fourth active material layer 50 is not particularly limited, and those skilled in the art may select it according to actual needs. As a preferred embodiment, the fourth active material layer 50 may have a thickness of 0.1 µm to 100 µm, for example, 0.1 µm, 0.5 µm, 1 µm, 5 µm, 10 µm, 20 µm, 30 µm, 40 µm, 50 µm, 60 µm, 70 µm, 80 µm, 90 µm, or 100 µm.

According to a specific embodiment of the present application, the first active material layer 20, the second active material layer 30, the third active material layer 40, and the fourth active material layer 50 may each be separately and independently prepared by rolling (i.e., rolling a metal strip serving as the active material layer onto the surface of a current collector or another active material layer) or physical vapor deposition (PVD, such as magnetron sputtering and vacuum evaporation), and the physical vapor deposition method is preferred. This is beneficial for reducing the thickness of the active material layer and achieving uniform deposition, thereby reducing the amount of active material used and reducing battery costs. Specifically, the metal lithium alloy (Li-M) may form an active material layer including the metal lithium alloy by magnetron sputtering the metal M onto the surface of the metal Li layer. Alternatively, the vacuum evaporation method may be used, that is, metal Li and metal M in the shape of strips, blocks, etc. are respectively placed in a container (such as an evaporation boat and a crucible). Considering the melting points of the metal Li and metal M, and under the premise of setting a reasonable evaporation chamber pressure and substrate temperature, different evaporation methods (such as resistance heating, electron beam evaporation, high-frequency heating and laser heating) and different evaporation temperatures may be used to control the composition and deposition rate of the metallic lithium alloy.

Therefore, the anode electrode sheet 100 of the present application may avoid lithium dendrite growth caused by uneven deposition of metallic lithium on the negative electrode surface, and solve the problems of continuous thickening of the SEI film, formation of dead lithium, and penetration of the separator by lithium dendrites resulting from the infinite volume change rate of metallic lithium, thereby helping to improve the cycle stability of lithium metal batteries to which the anode electrode sheet 100 is applied.

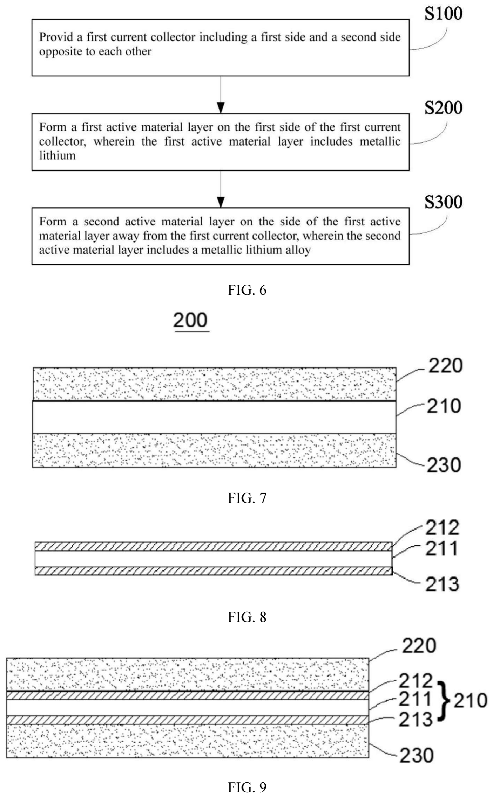

In a second aspect of the present application, a method for preparing an anode electrode sheet is provided. According to an embodiment of the present application, referring to FIG. 6, the method includes:
S100: forming a first current collector, where the first current collector includes a first side and a second side opposite to each other

In this step, a first current collector 10 is provided. The first current collector 10 includes a first side and a second side opposite to each other. It should be noted that the specific method for preparing the first current collector 10 is not particularly limited, and may include, for example: forming a first conductive layer 12 on one side of the first base film 11, and forming a second conductive layer 13 on the side of the first base film 11 away from the first conductive layer 12. By forming the first conductive layer 12 on a side of the first base film 11, the conductivity of the first current collector 10 may be improved. Meanwhile, by forming the second conductive layer 13 on an opposite other side of the first base film 11, the conductivity of the first current collector 10 may be further improved.

S200: forming a first active material layer on the first side of the first current collector, where the first active material layer includes metallic lithium

In this step, a first active material layer 20 is formed on a first side of the first current collector 10. The first active material layer 20 includes metallic lithium. The inventors have found that forming the first active material layer 20 including metallic lithium on the first side of the first current collector 10 may serve as a supplementary lithium source to improve the cycle life of the battery.

S300: forming a second active material layer on the first side of the first active material layer away from the first current collector, where the second active material layer includes a metallic lithium alloy.

In this step, a second active material layer 30 is formed on the side of the first active material layer 20 away from the first current collector 10. The second active material layer 30 includes a metallic lithium alloy. The inventors have found that by forming the second active material layer 30 including a lithium metal alloy on the side of the first active material layer 20 away from the first current collector 10, on one hand, the highly reactive metallic lithium in the first active material layer 20 may be prevented from directly contacting the liquid electrolyte or liquid, and on the other hand, the metallic lithium and the metallic lithium alloy in the second active material layer 30 may undergo an alloying reaction during the charge and discharge process of the battery, effectively avoiding lithium dendrite growth caused by uneven deposition of metallic lithium, and problems of continuous thickening of the SEI film, formation of dead lithium, and penetration of the separator by lithium dendrites resulting from the infinite volume change rate, thereby helping to improve the cycle stability of the lithium metal battery using the anode electrode sheet. Specifically, the first active material layer 20 may be formed on the first conductive layer 12.

The materials of the first base film 11, the first conductive layer 12, the second conductive layer 13, the first active material layer 20 and the second active material layer 30, as well as the preparation methods and thicknesses of the first conductive layer 12, the second conductive layer 13, the first active material layer 20 and the second active material layer 30 have been described in detail above and will not be repeated here.

According to an embodiment of the present application, the method for preparing an anode electrode sheet further includes: forming a third active material layer 40 on the second side of the first current collector 10. The third active material layer 40 includes metallic lithium or a metallic lithium alloy. If the third active material layer 40 includes metallic lithium, the third active material layer 40 may serve as a supplementary lithium source to improve the cycle life of the battery. If the third active material layer 40 includes a metallic lithium alloy, an alloying reaction may occur between the metallic lithium and the metallic lithium alloy in the third active material layer 40 during the charge and discharge process of the battery, thereby further avoiding lithium dendrite growth caused by uneven deposition of metallic lithium, and problems of continuous thickening of the SEI film, formation of dead lithium, and penetration of the separator by lithium dendrites resulting from the infinite volume change rate, thereby further helping to improve the cycle stability of the lithium metal battery to which the anode electrode sheet 100 is applied. Specifically, the third active material layer 40 may be formed on the second conductive layer 13.

According to a specific embodiment of the present application, if the third active material layer 40 includes metallic lithium, the above method for preparing an anode electrode sheet further includes: forming the fourth active material layer 50 on a side of the third active material layer 40 away from the first current collector 10. The fourth active material layer 50 includes a metal lithium alloy. By forming a fourth active material layer 50 including a metallic lithium alloy on the side of the third active material layer 40 away from the first current collector 10, on one hand, direct contact between the highly reactive metallic lithium in the third active material layer 40 and the electrolyte may be avoided; on the other hand, alloying reaction may occur between the metallic lithium and the metallic lithium alloy in the fourth active material layer 50 during the charge and discharge process of the battery, thereby further avoiding lithium dendrite growth caused by uneven deposition of metallic lithium, and problems of continuous thickening of the SEI film, formation of dead lithium, and penetration of the separator by lithium dendrites resulting from the infinite volume change rate, thereby helping to improve the cycle stability of the metallic lithium battery.

It should be noted that the preparation method and thickness of the third active material layer 40 and the fourth active material layer 50 have been described in detail above and will not be repeated here.

Therefore, the anode electrode sheet obtained by the method for preparing the anode electrode sheet of the present application may avoid lithium dendrite growth caused by the uneven deposition of metallic lithium on the negative electrode surface, and solve the problems of continuous thickening of the SEI film, persistent growth of lithium dendrites, formation of dead lithium, and penetration of the separator by lithium dendrites resulting from the infinite volume change rate of metallic lithium, thereby helping to improve the cycle stability of the lithium metal battery using the anode electrode sheet obtained by the method.

In a third aspect of the present application, the present application provides a bipolar electrode sheet. According to an embodiment of the present application, referring to FIG. 7, the bipolar electrode sheet 200 includes a second current collector 210, a fifth active material layer 220, and a sixth active material layer 230.

According to an embodiment of the present application, the second current collector 200 includes a first side and a second side opposite to each other. It should be noted that the specific type of the second current collector 210 is not particularly limited, and those skilled in the art may select it according to actual needs. For example, the second current collector 210 may be a metal foil current collector or a composite current collector.

According to an embodiment of the present application, the second current collector 210 is a metal foil current collector. The metal foil current collector may include a stainless steel alloy foil. The stainless steel alloy foil may include at least one of nickel, chromium, and copper.

According to an embodiment of the present application, referring to FIG. 8, the second current collector 210 is a composite current collector, and the second current collector 210 may include a second base film 211, a third conductive layer 212, and a fourth conductive layer 213.

According to a specific embodiment of the present application, the second base film 211 is made of a polymer, which has a lower density than the metal current collector. Therefore, the second current collector 210 prepared from the polymer also has a lower density than the metal current collector, which may improve the energy density of the battery.

It should be noted that the specific material of the above-mentioned second base film 211 is not particularly limited, and those skilled in the art may choose it according to actual needs. For example, it may include at least one of polyethylene (PE), polyethylene terephthalate (PET), polyimide (PI), polypropylene (PP), polyamide (PA), polyphenylene sulfide (PPS), and PEN. Optionally, the second base film 211 includes at least one of polyethylene terephthalate (PET), polypropylene (PP) and polyimide (PI); alternatively, the second base film 211 includes polyimide and/or polyphenylene sulfide. Polyimide and polyphenylene sulfide have flame retardant effects, thereby reducing the fire hazard caused by short circuits due to penetration of the base film by lithium dendrites.

According to a specific embodiment of the present application, the second base film 211 may have a thickness of 1 µm to 300 µm, for example, 1 µm, 5 µm, 10 µm, 30 µm, 50 µm, 100 µm, 150 µm, 200 µm, 250 µm, or 300 µm.

According to a specific embodiment of the present application, referring to FIG. 8, the third conductive layer 212 is disposed on one side of the second base film 211. By disposing the third conductive layer 212 on one side of the second base film 211, the conductivity of the second current collector 210 may be improved.

It should be noted that the material of the third conductive layer 212 is not particularly limited. Those skilled in the art may choose it according to actual needs, as long as it has excellent conductivity and good mechanical properties. For example, it may include at least one of copper, aluminum, nickel and chromium, preferably copper. Specifically, the third conductive layer 212 may have a thickness of 0.2 µm to 100 µm, for example, 0.2 µm, 0.5 µm, 1 µm, 5 µm, 10 µm, 20 µm, 30 µm, 40 µm, 50 µm, 60 µm, 70 µm, 80 µm, 90 µm, or 100 µm.

According to a specific embodiment of the present application, referring to FIG. 8, the fourth conductive layer 213 is disposed on the opposite other side of the second base film 211. Disposing the fourth conductive layer 213 on the opposite other side of the second base film 211 may further improve the conductivity of the second current collector 210.

It should be noted that the material of the fourth conductive layer 213 is not particularly limited. Those skilled in the art may choose it according to actual needs, as long as it has excellent conductivity and good mechanical properties. For example, it may include at least one of copper, aluminum, nickel and chromium, preferably aluminum. Specifically, the fourth conductive layer 213 may have a thickness of 0.2 µm to 100 µm, for example, 0.2 µm, 0.5 µm, 1 µm, 5 µm, 10 µm, 20 µm, 30 µm, 40 µm, 50 µm, 60 µm, 70 µm, 80 µm, 90 µm, or 100 µm.

According to a specific embodiment of the present application, the third conductive layer 212 and the fourth conductive layer 213 may each be separately and independently prepared by physical vapor deposition (PVD), chemical vapor deposition (CVD) or electroplating. For example, when copper is used for the third conductive layer 212, it may be prepared on the second base film 211 by a one-step method, a two-step method, or a three-step method. The specific steps of the one-step method, the two-step method, and the three-step method have been described in detail above and will not be repeated here. When aluminum is used for the fourth conductive layer 213, aluminum may be directly plated on the second base film 211 by vapor evaporation.

Therefore, the bipolar electrode sheet 200 of the present application may improve the mechanical strength and mechanical properties of the bipolar electrode sheet 200 by adopting the second current collector 210. On the other hand, compared with the metal current collector, the second current collector 210 has the advantages of low manufacturing cost, high safety and good compatibility. Meanwhile, the second current collector 210 has a lower density than that of the metal current collector (with a weight reduction of more than 60%), which may further improve the energy density of the battery.

According to a specific embodiment of the present application, referring to FIG. 9, the fifth active material layer 220 is disposed on the first side of the second current collector 210, and the fifth active material layer 220 includes a metal lithium alloy. The inventors have found that by providing a fifth active material layer 220 including a metallic lithium alloy on the first side of the second current collector 210, an alloying reaction may occur between the metallic lithium and the metallic lithium alloy in the fifth active material layer 220 during the charge and discharge process of the battery, which may effectively avoid lithium dendrite growth caused by uneven deposition of metallic lithium, and problems of continuous thickening of the SEI film, formation of dead lithium, and penetration of the separator by lithium dendrites resulting from the infinite volume change rate, thereby helping to improve the cycle stability of the battery using the bipolar electrode sheet. Specifically, the fifth active material layer 220 may be disposed on the third conductive layer 212.

According to a specific embodiment of the present application, the fifth active material layer 220 may be prepared by rolling or physical vapor deposition. Specifically, the fifth active material layer 220 may have a thickness of 0.1 µm to 100 µm, for example, 0.1 µm, 0.5 µm, 1 µm, 5 µm, 10 µm, 20 µm, 30 µm, 40 µm, 50 µm, 60 µm, 70 µm, 80 µm, 90 µm, or 100 µm.

It should be noted that the specific composition and preparation method of the metallic lithium alloy have been described in detail above and will not be repeated here.

According to a specific embodiment of the present application, referring to FIG. 9, the sixth active material layer 230 is disposed on the second side of the second current collector 210, and the sixth active material layer 230 includes a positive electrode active material. By disposing the sixth active material layer 230 on the second side of the second current collector 210, a bipolar electrode sheet may be obtained. Specifically, the sixth active material layer 230 may be disposed on the fourth conductive layer 213.

According to a specific embodiment of the present application, the sixth active material layer 230 may be prepared by a wet coating method or a dry coating method, and its thickness may be 0.1 µm to 100 µm, for example, 0.1 µm, 0.5 µm, 1 µm, 5 µm, 10 µm, 20 µm, 30 µm, 40 µm, 50 µm, 60 µm, 70 µm, 80 µm, 90 µm, or 100 µm.

It should be noted that the specific composition of the positive electrode active material is not particularly limited, and those skilled in the art may choose it according to actual needs. For example, it may include lithium nickel cobalt manganese oxide (LiNₓMyCzO₂, x+y+z=1), lithium iron manganese phosphate (LiFeₐMnₑPO₄, a+b=1), lithium iron phosphate, lithium manganese oxide, lithium cobalt oxide, lithium nickel oxide, lithium-rich manganese-based positive electrode materials, lithium nickel manganese oxide (LMNO), lithium vanadium phosphate (Li₃V₂(PO₄)₃, LiVOPO₄), etc.

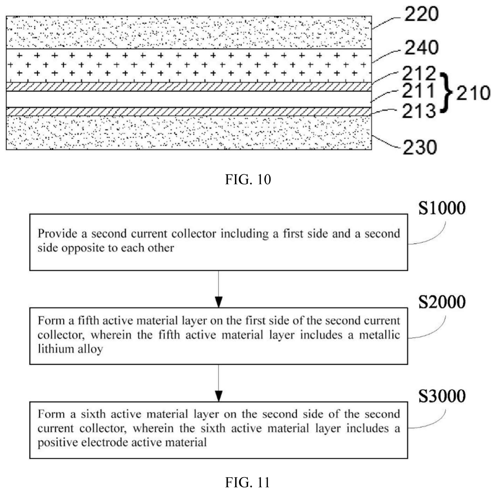

According to an embodiment of the present application, referring to FIG. 10, a seventh active material layer 240 including metallic lithium is disposed on a first side of the second current collector 210, and a fifth active material layer 220 is disposed on a side of the seventh active material layer 240 away from the second current collector 210. Compared with the theoretical specific capacity of 372 mAh/g of the graphite negative electrode, metallic lithium has an ultra-high theoretical specific capacity of 3860 mAh/g and the most negative standard reduction potential (-3.04V), as well as the characteristics of low density and small ion radius. By disposing the seventh active material layer 240 including metallic lithium on the first side of the second current collector 210, it may serve as a supplementary lithium source to improve the cycle life of the battery. The fifth active material layer 220 including a metallic lithium alloy is disposed on the side of the seventh active material layer 240 away from the second current collector 210. On the one hand, it may prevent the highly reactive metallic lithium in the seventh active material layer 240 from directly contacting the electrolyte. On the other hand, it may enable an alloying reaction between the metallic lithium and the metallic lithium alloy in the fifth active material layer 220 during the charge and discharge process of the battery, effectively avoiding lithium dendrite growth caused by uneven deposition of metallic lithium, and problems of continuous thickening of the SEI film, formation of dead lithium, and penetration of the separator by lithium dendrites resulting from the infinite volume change rate, thereby helping to improve the cycle stability of the battery using the bipolar electrode sheet 200. Specifically, the seventh active material layer 240 may be disposed on the third conductive layer 212.

According to a specific embodiment of the present application, the seventh active material layer 240 may be prepared by rolling or physical vapor deposition, and its thickness may be 0.1 µm to 100 µm, for example, 0.1 µm, 0.5 µm, 1 µm, 5 µm, 10 µm, 20 µm, 30 µm, 40 µm, 50 µm, 60 µm, 70 µm, 80 µm, 90 µm, or 100 µm.

Therefore, the bipolar electrode sheet 200 of the present application may avoid lithium dendrite growth caused by uneven deposition of metallic lithium on the negative electrode surface, and solve the problems of continuous thickening of the SEI film, formation of dead lithium, and penetration of the separator by lithium dendrites resulting from the infinite volume change rate of metallic lithium, thereby helping to improve the cycle stability of the battery using the bipolar electrode sheet 200.

In a fourth aspect of the present application, referring to FIG. 11, the present application provides a method for preparing a bipolar electrode sheet. According to an embodiment of the present application, the method includes:
S1000: providing a second current collector, where the second current collector includes a first side and a second side opposite to each other

In this step, a second current collector 210 is provided. The second current collector 210 includes a first side and a second side opposite to each other. It should be noted that the specific method for preparing the second current collector 210 is not particularly limited, and may include, for example: forming a third conductive layer 212 on one side of the second base film 211, and forming a fourth conductive layer 213 on the side of the second base film 211 away from the third conductive layer 212. By forming the third conductive layer 212 on one side of the second base film 211, the conductivity of the second current collector 210 may be improved. Meanwhile, forming the fourth conductive layer 213 on the side of the second base film 211 away from the third conductive layer 212 may also improve the conductivity of the second current collector 210.

S2000: forming a fifth active material layer on the first side of the second current collector, where the fifth active material layer includes a metal lithium alloy

In this step, a fifth active material layer 220 is formed on the first side of the second current collector 210. The fifth active material layer 220 includes a metal lithium alloy. The inventors have found that by forming the fifth active material layer 220 including a metallic lithium alloy on the first side of the second current collector 210, an alloying reaction may occur between the metallic lithium and the metallic lithium alloy in the fifth active material layer 220 during the charge and discharge process of the battery. This may effectively avoid lithium dendrite growth caused by uneven deposition of metallic lithium, and problems of continuous thickening of the SEI film, formation of dead lithium, and penetration of the separator by lithium dendrites resulting from the infinite volume change rate, thereby helping to improve the cycle stability of the battery to which the bipolar electrode sheet is applied. Specifically, the fifth active material layer 220 may be formed on the third conductive layer 212.

S3000: forming a sixth active material layer on the second side of the second current collector, where the sixth active material layer includes a positive electrode active material

In this step, a sixth active material layer 230 is formed on the second side of the second current collector 210. The sixth active material layer includes a positive electrode active material. By forming the sixth active material layer 230 including a positive electrode active material on the second side of the second current collector 210, a bipolar electrode sheet may be obtained.

The materials of the second base film 211, the third conductive layer 212, the fourth conductive layer 213, the fifth active material layer 220 and the sixth active material layer 230, as well as the preparation methods and thicknesses of the third conductive layer 212, the fourth conductive layer 213, the fifth active material layer 220 and the sixth active material layer 230 have been described in detail above and will not be repeated here.

According to an embodiment of the present application, the method for preparing the bipolar electrode sheet 200 further includes: before forming the fifth active material layer 220 on the first side of the second current collector 210, pre-forming a seventh active material layer 240 on the first side of the second current collector 210. The seventh active material layer 240 includes metallic lithium. Compared with the theoretical specific capacity of 372 mAh/g of the graphite negative electrode, metallic lithium has an ultra-high theoretical specific capacity of 3860 mAh/g and the most negative standard reduction potential (-3.04V), as well as the characteristics of low density and small ion radius. Before forming the fifth active material layer 220 on the first side of the second current collector 210, the seventh active material layer 240 including metallic lithium is pre-formed on the first side of the second current collector 210. The seventh active material layer 240 may serve as a supplementary lithium source to improve the cycle life of the battery. The fifth active material layer 220 including a metallic lithium alloy is formed on the side of the seventh active material layer 240 away from the second current collector 210, which is beneficial to reducing the problems of continuous thickening of the SEI film, persistent growth of lithium dendrites, formation of dead lithium, and penetration of the separator by lithium dendrites resulting from direct contact between the highly reactive metallic lithium in the seventh active material layer 240 and the liquid electrolyte or electrolyte, thereby helping to improve the cycle stability of the battery.

Therefore, the bipolar electrode sheet obtained by the method for preparing the bipolar electrode sheet of the present application may avoid lithium dendrite growth caused by the uneven deposition of metallic lithium on the negative electrode surface, and solve the problems of continuous thickening of the SEI film, formation of dead lithium, and penetration of the separator by lithium dendrites resulting from the infinite volume change rate of metallic lithium, thereby helping to improve the cycle stability of the battery.

In a fifth aspect of the present application, the present application provides a battery. According to an embodiment of the present application, the battery includes the above-mentioned anode electrode sheet or the anode electrode sheet obtained by the above-mentioned method for preparing an anode electrode sheet or the above-mentioned bipolar electrode plate or the bipolar electrode plate obtained by the above-mentioned method for preparing a bipolar electrode plate. Therefore, the battery has higher cycle stability. It should be noted that the features and advantages described above for the anode electrode sheet or bipolar electrode plate are also applicable to this battery and will not be repeated here.

According to an embodiment of the present application, the above-mentioned battery may include a liquid battery, a semi-solid battery and an all-solid battery.

According to a specific embodiment of the present application, the battery may include a liquid laminated battery, a liquid wound battery or a liquid cylindrical battery composed of the above-mentioned anode electrode sheet or an anode electrode sheet obtained by the above-mentioned method for preparing an anode electrode sheet, a positive electrode sheet, a separator and an electrolyte.

According to a specific embodiment of the present application, the electrolyte mainly includes a lithium salt, a solvent and optional additives. Specifically, the solvent may include carbonates (e.g., ethylene carbonate (EC), propylene carbonate (PC), butylene carbonate (BC), dimethyl carbonate (DMC), diethyl carbonate (DEC), ethyl methyl carbonate (EMC), γ-butyrolactone (BL)), ethers (e.g., tetrahydrofuran (THF), 2-methyl-tetrahydrofuran (2-Me-THF), dimethoxydimethyl ether (DMM), 1,2-dimethoxyethane (DME)), nitriles (e.g., acetonitrile (AN)), etc.; the lithium salt may include lithium hexafluorophosphate (LiPF₆), lithium perchlorate (LiClO₄), lithium tetrafluoroborate (LiBF₄), lithium hexafluoroarsenate (LiAsF₆), and other organic lithium salts (such as lithium trifluoromethanesulfonate (LiCF₃SO₃), lithium bis(trifluoromethanesulfonyl)imide (LiTFSI), lithium bis(fluorosulfonyl)imide (LiFSI), lithium trifluoromethanesulfonyl-n-perfluorobutylsulfonylimide (LiTNFSI), lithium fluorosulfonyl-n-perfluorobutylsulfonylimide (LiFNFSI), lithium bis(oxalate)borate (LiBOB), lithium tris(trifluoromethylsulfonyl)methyl (LiC(SO₂CF₃)₃), etc.); the additives may include film-forming additives, conductive additives, flame retardant additives, overcharge protection additives, additives for controlling water and HF content (i.e., additives that control water and HF content in the liquid electrolyte), low-temperature additives (i.e., general additives that improve low-temperature performance), and may also include negative electrode stabilizers, i.e., additives that improve the interface stability of the metallic lithium negative electrode (such as fluoroethylene carbonate (FEC) and lithium nitrate (LiNO₃)).

According to a specific embodiment of the present application, the battery may further include a semi-solid laminated battery, a semi-solid wound battery or a semi-solid cylindrical battery consisting of the above-mentioned anode electrode sheet or the anode electrode sheet obtained by the above-mentioned method for preparing the anode electrode sheet, a positive electrode sheet and a gel electrolyte.

According to a specific embodiment of the present application, the battery may further include a semi-solid laminated battery, a semi-solid wound battery or a semi-solid cylindrical battery composed of the above-mentioned anode electrode sheet or an anode electrode sheet obtained by the above-mentioned method for preparing the anode electrode sheet, a positive electrode sheet, a gel electrolyte and optionally 0.5 wt% to 50 wt% of an additive.

According to a specific embodiment of the present application, the battery may further include a solid-state laminated battery, a solid-state wound battery or a solid-state cylindrical battery consisting of the above-mentioned anode electrode sheet or an anode electrode sheet obtained by the above-mentioned method for preparing the anode electrode sheet, a positive electrode sheet and a solid electrolyte.

According to a specific embodiment of the present application, the battery may include a liquid laminated battery, a liquid wound battery or a liquid cylindrical battery consisting of the above-mentioned bipolar electrode sheet or a bipolar electrode sheet obtained by the above-mentioned method for preparing a bipolar electrode sheet, a separator and an electrolyte.

According to a specific embodiment of the present application, the battery may further include a semi-solid laminated battery, a semi-solid wound battery or a semi-solid cylindrical battery consisting of the above-mentioned bipolar electrode sheet or a bipolar electrode sheet obtained by the above-mentioned method for preparing the bipolar electrode sheet and a gel electrolyte.

According to a specific embodiment of the present application, the battery may further include a semi-solid laminated battery, a semi-solid wound battery or a semi-solid cylindrical battery consisting of the above-mentioned bipolar electrode sheet or a bipolar electrode sheet obtained by the above-mentioned method for preparing a bipolar electrode sheet, a gel electrolyte and optionally 0.5 wt% to 50 wt% of an additive.

According to a specific embodiment of the present application, the battery may further include a solid-state laminated battery, a solid-state wound battery or a solid-state cylindrical battery consisting of the above-mentioned bipolar electrode sheet or a bipolar electrode sheet obtained by the above-mentioned method for preparing the bipolar electrode sheet and a solid-state electrolyte.

According to a specific embodiment of the present application, the specific types of the above-mentioned positive electrode plate and its positive electrode active material are not particularly limited, and those skilled in the art may select according to actual needs. For example, the positive electrode plate may be a positive electrode plate using a metal foil current collector, or a positive electrode plate using a current collector, and its positive electrode active material may include at least one of lithium nickel cobalt manganese oxide (LiNxMyCzO₂, x+y+ z=1), lithium iron manganese phosphate (LiFeₐMn_{d}PO₄, a+b=1), lithium iron phosphate, lithium manganese oxide, lithium cobalt oxide, lithium nickel oxide, lithium-rich manganese-based positive electrode material, lithium nickel manganese oxide (LMNO) and lithium vanadium oxyphosphate (Li₃V₂(PO₄)₃, LiVOPO₄).

According to a specific embodiment of the present application, the separator may include polypropylene (PP) and/or polyethylene (PE).

According to a specific embodiment of the present application, the above-mentioned solid electrolyte may include an inorganic solid electrolyte (such as oxide-based solid electrolytes, sulfide-based solid electrolytes, and halide-based solid electrolytes), a polymer solid electrolyte and a composite solid electrolyte (such as a composite solid electrolyte based on a polymer matrix and an inorganic filler), etc. Specifically, oxide-based solid electrolytes may include NASICON type (with a stable structure, such as LATP (Li1.₃Al_{0.3}Ti_{1.7}(PO₄)₃), LAGP (Li_{1.5}Al_{0.5}Ge_{1.5}P₃O₁₂), perovskite type, and garnet type (with the highest conductivity, 10⁻³ S/cm, and good stability to metallic lithium, such as lithium lanthanum zirconium oxide (LLZO)). Sulfide-based solid electrolytes may include binary compounds (such as Li₂S-SiS₂, Li₂S-P₂S₅, and Li₂S-GeS₂), ternary compounds (such as Li₂S-MS₂-P₂S₅ (where M=Si, Ge, Sn, Al, etc.), and Li₆PS₅X (where X⁻F, Cl, Br, I) series. Halide-based solid electrolytes may include LiaMX₄ (where X represents a halogen element, such as Li₂MnCl₄ and Li₂ZnCl₄, formed by divalent metal ions, as well as halide electrolytes formed by trivalent and other valence metal ions M, such as LiYbF₄ and LiAlF₄), LiaMX₆ (such as Li₃YCl₆ (LYC) and Li₃BrCl₆ (LYB)) and LiaMX₈ series (such as Li₆CoCl₈). Polymer solid electrolytes may include polymer matrices such as polyethylene oxide (PEO), polycarbonate, polytrimethylene carbonate (PTMC), polymethyl methacrylate (PMMA), polyacrylonitrile (PAN), polyvinylidene fluoride (PVDF), polyvinylidene fluoride-hexafluoroethylene copolymer, and lithium polyacrylate (PAL); inorganic fillers such as LATP, lithium lanthanum zirconium oxide (LLZO), aluminum oxide (Al₂O₃), and metal organic frameworks (MOFs); and lithium salts such as LiAsF₆, lithium hexafluorophosphate (LiPF₆), lithium perchlorate (LiClO₄), lithium bis(trifluoromethanesulfonyl)imide (LiTFSI), lithium bis(fluorosulfonyl)imide (LiFSI), and lithium tetrafluoroborate (LiBF₄). Specifically, the gel electrolyte may include at least one of the above-mentioned solid electrolytes and at least one of the above-mentioned liquid electrolytes.

In a sixth aspect of the present application, the present application provides an electric device. According to an embodiment of the present application, the electric device includes the above-mentioned battery. The advantages of the electrical device and the above-mentioned battery over the prior art are the same and will not be described in detail here.

The present application is described below with reference to specific examples. It should be noted that these examples are merely illustrative and do not limit the present application in any way.

### Example 1

A anode electrode sheet, referring to FIG. 1 and FIG. 2, includes a first current collector 10, a first active material layer 20, and a second active material layer 30.

The first current collector 10 includes a first base film 11, a first conductive layer 12, and a second conductive layer 13. The first conductive layer 12 is disposed on the surface of a side of the first base film 11, and the second conductive layer 13 is disposed on the surface of an opposite other side of the first base film 11. The first base film 11 is made of polypropylene with a thickness of 1 µm. The first conductive layer 12 is made of copper with a thickness of 0.2 µm. The second conductive layer 13 is made of copper with a thickness of 0.2 µm.

The first current collector 10 includes a first side and a second side opposite to each other. The first active material layer 20 and the second active material layer 30 are sequentially disposed on the first side of the first current collector 10 in a direction away from the first current collector 10. The first active material layer 20 is made of metallic lithium with a thickness of 100 µm. The second active material layer 30 is made of a metallic lithium alloy with a thickness of 100 µm. The metallic lithium alloy in the second active material layer 30 is an alloy formed by metallic lithium and magnesium, with a lithium content of 2 atm%.

### Example 2

A anode electrode sheet, referring to FIG. 1 and FIG. 2, includes a first current collector 10, a first active material layer 20, and a second active material layer 30.

The first current collector 10 includes a first base film 11, a first conductive layer 12, and a second conductive layer 13. The first conductive layer 12 is disposed on the surface of a side of the first base film 11, and the second conductive layer 13 is disposed on the surface of an opposite other side of the first base film 11. The first base film 11 is made of polypropylene with a thickness of 300 µm. The first conductive layer 12 is made of copper with a thickness of 100 µm. The second conductive layer 13 is made of copper with a thickness of 100 µm.

The first current collector 10 includes a first side and a second side opposite to each other, and the first active material layer 20 and the second active material layer 30 are sequentially disposed on the first side of the first current collector 10 in a direction away from the first current collector 10; the first active material layer 20 is made of metallic lithium with a thickness of 0.1 µm. The second active material layer 30 is made of a metallic lithium alloy with a thickness of 0.1 µm. The metallic lithium alloy in the second active material layer 30 is an alloy formed by metallic lithium and magnesium, with a lithium content of 98 atm%.

### Example 3

A anode electrode sheet, referring to Figure 4, includes a first current collector 10, a first active material layer 20, a second active material layer 30 and a third active material layer 40. The third active material layer 40 is made of metallic lithium with a thickness of 0.1 µm. The third active material layer 40 is disposed on the second side of the first current collector 10. The rest is the same as in Example 1.

### Example 4

A anode electrode sheet, referring to Figure 4, includes a first current collector 10, a first active material layer 20, a second active material layer 30 and a third active material layer 40. The third active material layer 40 is made of metallic lithium with a thickness of 100 µm. The third active material layer 40 is disposed on the second side of the first current collector 10. The rest is the same as in Example 1.

### Example 5

A anode electrode sheet, referring to FIG. 4, includes a first current collector 10, a first active material layer 20, a second active material layer 30 and a third active material layer 40. The third active material layer 40 is made of a metallic lithium alloy. The rest is the same as in Example 3.

### Example 6

A anode electrode sheet, referring to FIG. 4, includes a first current collector 10, a first active material layer 20, a second active material layer 30 and a third active material layer 40. The third active material layer 40 is made of a metallic lithium alloy with a thickness of 100 µm. The rest is the same as in Example 3.

### Example 7

A anode electrode sheet, referring to FIG. 5, includes a first current collector 10, a first active material layer 20, a second active material layer 30, a third active material layer 40 and a fourth active material layer 50. The fourth active material layer 50 is made of a metallic lithium alloy with a thickness of 0.1 µm. The fourth active material layer 50 is disposed on a side of the third active material layer 40 including metallic lithium away from the first current collector 10. The rest is the same as in Example 3.

### Example 8

A anode electrode sheet, referring to FIG. 5, includes a first current collector 10, a first active material layer 20, a second active material layer 30, a third active material layer 40 and a fourth active material layer 50. The fourth active material layer 50 is made of a metallic lithium alloy with a thickness of 100 µm. The fourth active material layer 50 is disposed on a side of the third active material layer 40 including metallic lithium away from the first current collector 10. The rest is the same as in Example 3.

### Example 9

A bipolar electrode sheet, referring to FIG. 7 and FIG. 8, includes a second current collector 210, a fifth active material layer 220 and a sixth active material layer 230;

The second current collector 210 includes a second base film 211, a third conductive layer 212, and a fourth conductive layer 213. The third conductive layer 212 is disposed on the surface of one side of the second base film 211, and the fourth conductive layer 213 is disposed on the surface of the opposite other side of the second base film 211. The second base film 211 is made of polypropylene with a thickness of 300 µm. The third conductive layer 212 is made of copper with a thickness of 100 µm. The fourth conductive layer 213 is made of aluminum with a thickness of 100 µm.

The second current collector 210 includes a first side and a second side opposite to each other. The fifth active material layer 220 is disposed on the first side of the second current collector 210 (i.e., the side of the third conductive layer 212 away from the second base film 211). The sixth active material layer 230 is disposed on the second side of the second current collector 210 (i.e., the side of the fourth conductive layer 213 away from the second base film 211). The fifth active material layer 220 is made of a metallic lithium alloy and has a thickness of 1 µm. The metallic lithium alloy in the fifth active material layer 220 is an alloy of metallic lithium and magnesium, with a lithium content of 2 atm%. The sixth active material layer 230 includes a positive electrode active material lithium nickel cobalt manganese oxide (LiN_{0.8}M_{0.1}C_{0.1}O₂) with a thickness of 1 µm.

### Example 10

A bipolar electrode sheet, referring to FIG. 7 and FIG. 8, includes a second current collector 210, a fifth active material layer 220 and a sixth active material layer 230.

The second current collector 210 includes a second base film 211, a third conductive layer 212, and a fourth conductive layer 213. The third conductive layer 212 is disposed on the surface of one side of the second base film 211, and the fourth conductive layer 213 is provided on the surface of the opposite other side of the second base film 211. The second base film 211 is made of polypropylene with a thickness of 1 µm, the third conductive layer 212 is made of copper with a thickness of 0.5 µm, and the fourth conductive layer 213 is made of aluminum with a thickness of 0.5 µm.

The second current collector 210 includes a first side and a second side opposite to each other. The fifth active material layer 220 is disposed on the first side of the second current collector 210 (i.e., the side of the third conductive layer 212 away from the second base film 211). The sixth active material layer 230 is disposed on the second side of the second current collector 210 (i.e., the side of the fourth conductive layer 213 away from the second base film 211). The fifth active material layer 220 is made of a metallic lithium alloy with a thickness of 100 µm. The metallic lithium alloy in the fifth active material layer 220 is an alloy of metallic lithium and magnesium, with a lithium content of 98 atm%. The sixth active material layer 230 includes a positive electrode active material lithium nickel cobalt manganese oxide (LiN_{0.8}M_{0.1}C_{0.1}O₂), with a thickness of 100 µm.

### Example 11

A bipolar electrode sheet, referring to FIG. 10, includes a second current collector 210, a fifth active material layer 220, a sixth active material layer 230 and a seventh active material layer 240. The seventh active material layer 240 is made of metallic lithium with a thickness of 100 µm. The seventh active material layer 240 is disposed on a first side of the second current collector 210, and the fifth active material layer 220 is disposed on the surface of a side of the seventh active material layer 240 away from the second current collector 210. The rest is the same as in Example 9.

### Example 12

A bipolar electrode sheet, referring to Figure 10, includes a second current collector 210, a fifth active material layer 220, a sixth active material layer 230 and a seventh active material layer 240. The seventh active material layer 240 is made of metallic lithium with a thickness of 1 µm. The seventh active material layer 240 is disposed on the first side of the second current collector 210, and the fifth active material layer 220 is disposed on the surface of the side of the seventh active material layer 240 away from the second current collector 210. The rest is the same as Example 9.

Liquid batteries were assembled respectively using the anode electrode sheets of Examples 1-8 and the bipolar electrode sheets of Examples 9-12, following the steps below:

### 1. Preparation of positive electrode sheet

The positive electrode active material LiNi_{0.7}Co_{0.1}Mn_{0.1}O₂, the conductive agent Super P, and the binder polyvinylidene fluoride (PVDF) were mixed in N-methylpyrrolidone (NMP) to form a positive electrode slurry, where the solid content in the positive electrode slurry was 50 wt%, and a mass ratio of LiNi_{0.7}Co_{0.1}Mn_{0.1}O₂, Super P, and PVDF in the solid components was 8:1:1. The positive electrode slurry was coated on the upper and lower surfaces of the current collector aluminum foil and dried at 85°C and then cold pressed. After edge trimming, sheet cutting and slitting, it was dried under vacuum conditions at 85°C for 4 hours to make the positive electrode sheet.

### 2. Preparation of liquid electrolyte

In an argon atmosphere glove box (H₂O <0.1 ppm, O₂ <0.1 ppm), the fully dried electrolyte salt LiPF₆ was dissolved in a mixed solvent (the mixed solvent included ethylene carbonate (EC) and diethyl carbonate (DEC), with EC and DEC mixed in a mass ratio of 50:50), and after mixing evenly, a liquid electrolyte with a concentration of 1 mol/L was obtained.

### 3. Separator

A 16 µm polyethylene film was used as the separator.

### 4. Preparation of lithium metal batteries

The positive electrode sheet, the separator, and the anode electrode sheets of Examples 1-8 were stacked in order, with the separator placed between the positive and anode electrode sheets to isolate the positive and negative electrodes. The stacked assembly was wound to obtain a bare battery cell and tabs were welded. The bare battery cell was placed in outer packaging, and the liquid electrolyte prepared above was injected into the dried battery cell. The resulting battery cell was packaged, allowed to stand, formed, shaped, and capacity tested to complete the preparation of the lithium metal battery.

The bipolar electrode sheets and separators of Examples 9-12 were stacked in order, and the stacked assembly was wound to obtain a bare battery cell, and the tabs were welded. The bare battery cell was placed in outer packaging, and the above-prepared electrolyte was injected into the dried battery cell. The battery cell was packaged, allowed to stand, formed, shaped, and capacity tested to complete the preparation of the lithium metal battery.

The cycling performance of the lithium metal batteries obtained from the anode electrode sheets of Examples 1-8 and the bipolar electrode sheets of Examples 9-12 was characterized.

### Testing method for cycling performance of lithium metal batteries

The batteries were charged at a constant current of 0.2C at 25°C±2°C until the battery voltage reached 4.2V. The batteries were then switched to constant voltage charging and charged until the charging current dropped to 0.05C. Charging was then stopped after the batteries were allowed to stand for 30 minutes. The batteries were then discharged at a current of 0.3C until the voltage reached 2.6V. After 50 cycles of the above charge and discharge process, the batteries were disassembled and scanning electron microscope (SEM) tests were performed on the anode electrode sheets of Examples 1-8 and the bipolar electrode sheets of Examples 9-12.

From the obtained SEM images, it may be seen that the surfaces of the anode electrode sheets of Examples 1-8 and the negative electrode surfaces of the bipolar sheets of Examples 9-12 are uniform and relatively flat, with no obvious growth of lithium dendrites observed.

It may be seen from Examples 1-12 that the use of this anode electrode sheet or bipolar electrode sheet may avoid problems such as continuous thickening of the SEI film, persistent growth of lithium dendrites, formation of dead lithium, and penetration of the separator by lithium dendrites, thereby helping to improve the cycle stability of the battery using the anode electrode sheet or bipolar electrode sheet.

In the description of this specification, reference to the terms "one embodiment", "some embodiments", "example", "specific example", or "some examples" means that the specific features, structures, materials or characteristics described in conjunction with the embodiment or example are included in at least one embodiment or example of the present application. In this specification, the schematic expressions of the above terms do not necessarily refer to the same embodiment or example. Furthermore, the specific features, structures, materials, or characteristics described may be combined in any suitable manner in any one or more embodiments or examples. Furthermore, those skilled in the art may combine and integrate different embodiments or examples and features of different embodiments or examples described in this specification without mutual contradiction.

Although the embodiments of the present application have been shown and described above, it will be understood that the above embodiments are illustrative and are not to be construed as limitations on the present application. A person of ordinary skill in the art may make changes, modifications, substitutions, and variations to the above embodiments within the scope of the present application.

## Claims

1. an anode electrode sheet, **characterized by** comprising:
a first current collector comprising a first side and a second side opposite to each other; and
a first active material layer and a second active material layer, wherein the first active material layer and the second active material layer are sequentially disposed on the first side in a direction away from the first current collector, the first active material layer comprises metallic lithium, and the second active material layer comprises a metallic lithium alloy.

2. The anode electrode sheet according to claim 1, wherein the first current collector is a composite current collector.

3. The anode electrode sheet according to claim 1, wherein the first current collector is a metal foil current collector, and the metal foil current collector comprises at least one selected from the group consisting of copper, aluminum, nickel and chromium.

4. The anode electrode sheet according to claim 2, wherein the first current collector comprises a first base film, a first conductive layer disposed on a side of the first base film, and a second conductive layer disposed on an opposite other side of the first base film.

5. The anode electrode sheet according to claim 4, wherein the first conductive layer and the second conductive layer separately and independently comprise at least one selected from the group consisting of copper, aluminum, nickel and chromium.

6. The anode electrode sheet according to claim 4 or 5, wherein the first conductive layer and the second conductive layer separately and independently have a thickness of 0.2 µm to 100 µm.

7. The anode electrode sheet according to claim 4, wherein the first base film comprises at least one selected from the group consisting of polyethylene, polyethylene terephthalate, polyimide, polypropylene, polyamide, polyphenylene sulfide, and polyethylene naphthalate.

8. The anode electrode sheet according to claim 4 or 7, wherein the first base film has a thickness of 1 µm to 300 µm.

9. The anode electrode sheet according to claim 4, wherein a third active material layer is disposed on the second side of the first current collector, and the third active material layer comprises metallic lithium or a metallic lithium alloy.

10. The anode electrode sheet according to claim 9, wherein the first active material layer is disposed on the first conductive layer, and the third active material layer is disposed on the second conductive layer.

11. The anode electrode sheet according to claim 9, wherein the third active material layer comprises metallic lithium, a fourth active material layer is disposed on a side of the third active material layer away from the first current collector, and the fourth active material layer comprises a metallic lithium alloy.

12. The anode electrode sheet according to claim 1, 9 or 11, wherein the metallic lithium alloy comprises an alloy formed by metallic lithium and at least one selected from the group consisting of gold, silver, indium, magnesium, zinc, chromium, nickel, molybdenum, tungsten, vanadium, titanium, niobium, zirconium, cobalt, manganese, aluminum, copper, tin, sodium, calcium, gallium, boron, silicon, carbon and phosphorus.

13. The anode electrode sheet according to claim 12, wherein the metallic lithium alloy has a lithium content of 2 atm% to 98 atm%.

14. The anode electrode sheet according to claim 11, wherein the first active material layer, the second active material layer, the third active material layer, and the fourth active material layer separately and independently have a thickness of 0.1 µm to 100 µm.

15. A method for preparing an anode electrode sheet, **characterized by** comprising:
providing a first current collector comprising a first side and a second side opposite to each other;
forming a first active material layer on a first side of the first current collector, wherein the first active material layer comprises metallic lithium; and
forming a second active material layer on a side of the first active material layer away from the first current collector, wherein the second active material layer comprises a metal lithium alloy.

16. The method according to claim 15, further comprising:
forming a third active material layer on the second side of the first current collector, wherein the third active material layer comprises metallic lithium or a metallic lithium alloy.

17. The method according to claim 16, wherein the third active material layer comprises metallic lithium, and the method further comprises:
forming a fourth active material layer on a side of the third active material layer away from the first current collector, and the fourth active material layer comprises a metal lithium alloy.

18. A bipolar electrode sheet, **characterized by** comprising:
a second current collector comprising a first side and a second side opposite to each other; and
a fifth active material layer and a sixth active material layer, wherein the fifth active material layer is disposed on the first side of the second current collector, and the sixth active material layer is disposed on the second side of the second current collector, the fifth active material layer comprises a metallic lithium alloy, and the sixth active material layer comprises a positive electrode active material.

19. The bipolar electrode sheet according to claim 18, wherein a seventh active material layer is disposed on the first side of the second current collector, the seventh active material layer comprises metallic lithium, and the fifth active material layer is disposed on a side of the seventh active material layer away from the second current collector.

20. The bipolar electrode sheet according to claim 18 or 19, wherein the second current collector is a composite current collector.

21. The bipolar electrode sheet according to claim 18 or 19, wherein the second current collector is a metal foil current collector, the metal foil current collector comprises a stainless steel alloy foil, and the stainless steel alloy foil comprises at least one selected from the group consisting of nickel, chromium and copper.

22. The bipolar electrode sheet according to claim 18, wherein the second current collector comprises a second base film, a third conductive layer disposed on a side of the second base film, and a fourth conductive layer disposed on an opposite other side of the second base film, the fifth active material layer is disposed on the third conductive layer, and the sixth active material layer is disposed on the fourth conductive layer.

23. The bipolar electrode sheet according to claim 19, wherein the second current collector comprises a second base film, a third conductive layer disposed on a side of the second base film, and a fourth conductive layer disposed on an opposite other side of the second base film, the seventh active material layer is disposed on the third conductive layer, and the sixth active material layer is disposed on the fourth conductive layer.

24. The bipolar electrode sheet according to claim 22 or 23, wherein the third conductive layer and the fourth conductive layer separately and independently comprise at least one selected from the group consisting of copper, aluminum, nickel and chromium.

25. The bipolar electrode sheet according to claim 18, wherein the positive electrode active material comprises at least one selected from the group consisting of lithium nickel cobalt manganese oxide, lithium iron manganese phosphate, lithium iron phosphate, lithium manganese oxide, lithium cobalt oxide, lithium nickel oxide, lithium rich manganese-based positive electrode material, lithium nickel manganese oxide and lithium vanadium oxyphosphate.

26. A method for preparing a bipolar electrode sheet, **characterized by** comprising:
providing a second current collector comprising a first side and a second side opposite to each other;
forming a fifth active material layer on the first side of the second current collector, wherein the fifth active material layer comprises a metallic lithium alloy; and
forming a sixth active material layer on the second side of the second current collector, wherein the sixth active material layer comprises a positive electrode active material.

27. The method according to claim 26, further comprising: before forming the fifth active material layer on the first side of the second current collector, pre-forming a seventh active material layer on the first side of the second current collector, wherein the seventh active material layer comprises metallic lithium.

28. A battery, **characterized by** comprising the anode electrode sheet according to any one of claims 1 to 14, or the anode electrode sheet obtained by the method according to any one of claims 15 to 17, or the bipolar electrode sheet according to any one of claims 18 to 25, or the bipolar electrode sheet obtained by the method according to claim 26 or 27.

29. The battery according to claim 28, wherein the battery comprises a liquid battery, a semi-solid battery and an all-solid battery.

30. The battery according to claim 28, wherein the battery comprises a liquid battery and a semi-solid battery, the battery comprises a liquid electrolyte, and the liquid electrolyte comprises a lithium salt and a solvent.

31. The battery according to claim 30, wherein the lithium salt comprises at least one selected from the group consisting of lithium hexafluorophosphate, lithium perchlorate, lithium tetrafluoroborate, lithium hexafluoroarsenate, lithium trifluoromethanesulfonate, lithium bis(trifluoromethanesulfonyl)imide, lithium bis(fluorosulfonyl)imide, lithium trifluoromethanesulfonyl-n-perfluorobutylsulfonylimide, lithium fluorosulfonyl-n-perfluorobutylsulfonylimide, lithium bis(oxalate)borate and tris(trifluoromethylsulfonyl)methyllithium.

32. The battery according to claim 30 or 31, wherein the solvent comprises at least one selected from the group consisting of ethylene carbonate, propylene carbonate, butylene carbonate, dimethyl carbonate, diethyl carbonate, ethyl methyl carbonate, γ-butyrolactone, tetrahydrofuran, 2-methyltetrahydrofuran, dimethoxydimethyl ether, 1,2-dimethoxyethane and acetonitrile.

33. The battery according to claim 30, wherein the liquid electrolyte further comprises an additive.

34. The battery according to claim 33, wherein the additive comprises at least one selected from the group consisting of a film-forming additive, a conductive additive, a flame retardant additive, an overcharge protection additive, an additive for controlling water and HF content, a low-temperature additive, and a negative electrode stabilizer.

35. The battery according to claim 28, wherein the battery comprises a semi-solid-state battery and an all-solid-state battery, and wherein the battery comprises an electrolyte, and the electrolyte comprises at least one selected from the group consisting of an inorganic solid electrolyte, a polymer solid electrolyte, and a composite solid electrolyte.

36. The battery according to claim 35, wherein the inorganic solid electrolyte comprises at least one selected from the group consisting of an oxide-based solid electrolytes, a sulfide-based solid electrolyte, and a halide-based solid electrolyte, and wherein the oxide-based solid electrolyte comprises at least one selected from the group consisting of a NASICON solid electrolyte, a perovskite solid electrolyte and a garnet solid electrolyte; the sulfide-based solid electrolyte comprises at least one selected from the group consisting of Li₆PS₅F, Li₆PS₅Cl, Li₆PS₅Br, Li₆PS₅I, Li₂S-SiS₂, Li₂S-P₂S₅, Li₂S-GeS₂, Li₂S-SiS₂-P₂S₅, Li₂S-GeS₂-P₂S₅, Li₂S-SnS₂-P₂S₅ and Li₂S-AlS₂-P₂S₅; the halide-based solid electrolyte comprises at least one selected from the group consisting of Li₂MnCl₄, Li₂ZnCl₄, LiYbF₄, LiAlF₄, Li₃YCl₆, Li₃BrCl₆ and Li₆CoCl₈.

37. The battery according to claim 35, wherein the polymer solid electrolyte comprises a polymer matrix, an inorganic filler and a lithium salt, and wherein the polymer matrix comprises at least one selected from the group consisting of polyethylene oxide, polycarbonate, polytrimethylene carbonate, polymethyl methacrylate, polyacrylonitrile, polyvinylidene fluoride, polyvinylidene fluoride-hexafluoroethylene copolymer and lithium polyacrylate; the inorganic filler comprises at least one selected from the group consisting of Li_{1.3}Al_{0.3}Ti_{1.7}(PO₄)₃, lithium lanthanum zirconium oxide, aluminum oxide and a metal organic framework; and the lithium salt comprises at least one selected from the group consisting of LiAsF₆, LiPF₆, LiClO₄, lithium bis(trifluoromethanesulfonyl)imide, lithium bis(fluorosulfonyl)imide and lithium tetrafluoroborate.

38. An electric device, **characterized by** comprising the battery according to any one of claims 28 to 37.
